# EUROPÄISCHE PATENTSCHRIFT

(11) **EP 4 155 761 B1**
(45) Veröffentlichungstag und Bekanntmachung des Hinweises auf die Patenterteilung: **06.03.2024**
(21) Anmeldenummer: 21198788.8
(22) Anmeldetag: 24.09.2021
(51) Int. Cl.: G01S 17/86, G01S 7/481, G01S 17/89

(54) **LASERSCANNER ZUM 3D-VERMESSEN EINER UMGEBUNG**
LASER SCANNER FOR 3D MEASUREMENT OF AN ENVIRONMENT
BALAYEUR LASER PERMETTANT DE MESURER DE MANIÈRE TRIDIMENSIONNELLE UN ENVIRONNEMENT

(43) Veröffentlichungstag der Anmeldung: 29.03.2023
(73) Patentinhaber: RIEGL Laser Measurement Systems GmbH, 3580 Horn (AT)
(72) Erfinder: BRONNER, Günther, 3013 Tullnerbach (AT); PFENNIGBAUER, Martin, 3430 Tulln (AT)
(74) Vertreter: Weiser & Voith Patentanwälte Partnerschaft

(56) Entgegenhaltungen:
- US-A1- 2016 274 224
- US-A1- 2019 063 914
- US-A1- 2020 355 499

## Beschreibung

Die vorliegende Erfindung betrifft einen Laserscanner zum dreidimensionalen ("3D"-)Vermessen einer Umgebung nach einem Laserlaufzeitverfahren. Der Laserscanner umfasst ein Stativ zum Aufstellen in der Umgebung, eine am Stativ drehbar gelagerte Scaneinheit, welche dazu ausgebildet ist, einen um eine Scanachse aufgefächerten, weitgehend ebenen Scanfächer aus Laserstrahlen auszusenden und an Zielen der Umgebung reflektierte Laserstrahlen zu empfangen, einen Drehantrieb, welcher dazu ausgebildet ist, die Scaneinheit über einen vorgegebenen Drehwinkel um eine zur Scanachse und zu einer innerhalb des Scanfächers liegenden Strahlrichtung normale Drehachse gegenüber dem Stativ zu drehen, und eine an die Scaneinheit und den Drehantrieb angeschlossene Auswerteeinheit zur Auswertung der empfangenen Laserstrahlen.

Derartige Stativ-Laserscanner sind auch als terrestrische Laserscanner ("TLS") bekannt und transportabel, werden jedoch im Unterschied zu mobilen Laserscannern ("MLS") während des 3D-Vermessens der Umgebung mithilfe ihres Stativs an einem Ort in der Umgebung fix aufgestellt, weshalb die Scaneinheit und mit ihr der Scanfächer um die Drehachse drehbar sind. Sie werden beispielsweise zur Bestandsaufnahme in der Architektur (im Innen- und Außenbereich) oder in der Natur, z.B. zum 3D-Vermessen von Steinbrüchen, Berghängen, Felswänden oder des Holzbestands von Wäldern, eingesetzt und können bei einer späteren zweiten Bestandsaufnahme zum Ermitteln von Veränderungen, z.B. Hangrutschungen, Holzzuwachs etc., verwendet werden.

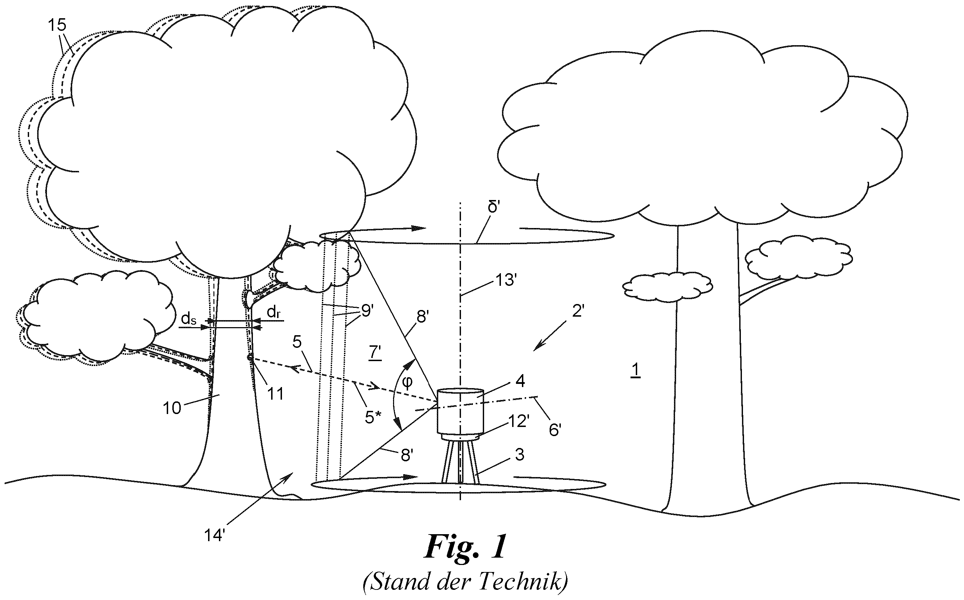

Fig. 1 veranschaulicht das Prinzip eines TLS zum 3D-Vermessen einer Umgebung 1 (hier: eines Waldes) gemäß dem Stand der Technik. Zunächst wird ein Laserscanner 2' mithilfe seines Stativs 3 in der Umgebung 1 aufgestellt. Die gegenüber dem Stativ 3 drehbar gelagerte Scaneinheit 4 sendet mit einer Rate von meist einigen 10 kHz bis einigen MHz modulierte oder gepulste Laserstrahlen 5 aus, welche von einer strahlablenkenden Optik der Scaneinheit 4, z.B. rotierenden Spiegeln oder Prismen, über einen Fächerwinkel ϕ um eine Scanachse 6' zu einem im Wesentlichen vertikalen Scanfächer 7' aufgefächert werden, welcher in Fig. 1 durch die Schenkel 8' des Fächerwinkels ϕ und eine die Schenkel 8' verbindende Scanlinie 9' veranschaulicht ist. Trifft ein ausgesandter Laserstrahl 5 auf ein Ziel in der Umgebung 1, z.B. auf einen Baumstamm 10 (siehe Auftreffpunkt 11), wird er daran reflektiert und der reflektierte Laserstrahl 5* in der Scaneinheit 4 empfangen.

Da der Scanfächer 7' mit seiner Scanlinie 9' lediglich eine 2D-Vermessung in der Ebene des Scanfächers 7' ermöglicht, umfasst der Stativ-Laserscanner 2' zum 3D-Vermessen ferner einen Drehantrieb 12', welcher die Scaneinheit 4 und damit den Scanfächer 7' über einen Drehwinkel δ' um eine vertikale Drehachse 13' dreht; der Drehwinkel δ' ist meist mit 360 Grad vorgegeben, da die gesamte Umgebung 1 vermessen werden soll, kann jedoch alternativ ein Teil davon sein. Die Drehbewegung um die Drehachse 13' ist wesentlich langsamer als das Auffächern der Laserstrahlen 5 um die Scanachse 6' mithilfe der Optik. Dies ist einerseits der gewünschten Auflösung in Drehrichtung geschuldet, d.h. die Umgebung 1 wird durch eine Aufeinanderfolge vertikaler Scanlinien 9' mit von der Drehbewegung abhängigem Linienabstand 3D-vermessen, und andererseits der Notwendigkeit, dass Bedienpersonal aus Sicherheitsgründen und zur Vermeidung von störenden Abschattungen nicht vom Scanfächer 7' erfasst werden soll.

Der vom Laserscanner 2' beim 3D-Vermesse erfassbare Bereich der Umgebung 1 ist in Fig. 1 durch einen Scanstreifen 14' in Form eines stehenden Kreiszylindermantels versinnbildlicht, welcher durch die zueinander parallelen Scanlinien 9' gebildet ist. Es versteht sich, dass der Scanstreifen 14' lediglich zur Veranschaulichung dient: Tatsächlich sind die Scanlinien 9' nicht sichtbar, sondern allenfalls die Auftreffpunkte 11 der Laserstrahlen 5 auf Zielen 10 der Umgebung 1, wenn die Scaneinheit 4 im sichtbaren Wellenlängenbereich arbeitet.

In einer an die Scaneinheit 4 und den Drehantrieb 12' angeschlossenen Auswerteeinheit werden die empfangenen Laserstrahlen 5* nach ihrer Aussenderichtung und ihrer Laufzeit ausgewertet. Aus einer Vielzahl von empfangenen Laserstrahlen 5* kann dann z.B. eine 3D-Punktwolke bzw. ein 3D-Modell der 3D-vermessenen Umgebung 1 erstellt werden.

Nachteil solcher TLS ist unter anderem, dass das 3D-Vermessen in Vertikalrichtung durch den Fächerwinkel ϕ beschränkt ist; diese Beschränkung ist nur durch einen aufwändigen Eingriff in die ablenkende Optik oder durch erneutes 3D-Vermessen von einer anderen Position der Umgebung aus zu umgehen. Ferner können horizontale Bewegungen in der Umgebung, welche insbesondere beim 3D-Vermessen von im Wind bewegten Baumstämmen 10 auftreten (in Fig. 1 durch strichlierte Linien 15 versinnbildlicht), aufgrund der langsamen Drehbewegung nicht präzise 3D-vermessen werden: Im Beispiel der Fig. 1 kann sich somit gerade im höheren Bereich eines Baumstamms 10 eine wesentliche Abweichung zwischen dem tatsächlichen Stammdurchmesser dᵣ und dem 3D-vermessenen Stammdurchmesser dₛ ergeben. In der Praxis wird deshalb das 3D-Vermessen auf einen Zeitpunkt verlegt, zu welchem (z.B. infolge von Windstille) mit geringeren Abweichungen zu rechnen ist, oder es wird das 3D-Vermessen wiederholt und durch kombiniertes Auswerten der Messfehler möglichst verringert. Der Zeit- und/oder Auswerteaufwand ist dabei jeweils wesentlich höher.

Die Schrift US 2016/0274224 A1 zeigt einen Laserscanner mit einer einen Scanfächer aussendenden Scaneinheit, die in einer Kardanaufhängung um zwei orthogonale Achsen drehbar gelagert ist, um eine Umgebung schneller zu vermessen.

Die Erfindung setzt sich zum Ziel, einen Laserscanner zu schaffen, welcher effizienter in der Anwendung ist und präzisere Vermessungsergebnisse erzielt als herkömmliche TLS und dabei ebenso einfach handhabbar ist.

Das Ziel wird mit einem Laserscanner der einleitend genannten Art erreicht, wobei die Drehachse des Drehantriebs, wenn das Stativ in der Umgebung aufgestellt ist, horizontal ist, wobei der Laserscanner einen Schwenkantrieb umfasst, welcher an die Auswerteeinheit angeschlossen und dazu ausgebildet ist, nach dem Drehen der Scaneinheit über den Drehwinkel die Scaneinheit über einen vorgegebenen Schwenkwinkel um eine vertikale Schwenkachse gegenüber dem Stativ zu schwenken. Durch die horizontale Drehachse, welche normal zur Scanachse und zu einer an sich beliebigen, innerhalb des Scanfächers liegenden Strahlrichtung ist, sind auch die Scanlinien horizontal. Der dadurch erzielte Scanstreifen hat somit die Form eines liegenden Zylindermantels bzw. Zylindermantelsegments. Die Umgebung wird infolgedessen in horizontaler Richtung sehr rasch 3D-vermessen, nämlich mit der Geschwindigkeit des Auffächerns und nicht mit der wesentlich geringeren Geschwindigkeit der Drehbewegung. Der Laserscanner hat damit eine hohe zeitliche Auflösung in horizontaler Richtung, u.zw. ohne Einfluss auf die erzielbare Gesamtauflösung beim 3D-Vermessen. Folglich werden auch Ziele in horizontaler Bewegung, z.B. Bäume im Wind, wesentlich präziser 3D-vermessen als mit herkömmlichen TLS, u.zw. auch ohne Wiederholung und somit effizienter. Zugleich kann das 3D-Vermessen in vertikaler Richtung einfach durch Vorgabe des gewünschten Drehwinkels an jeweilige Erfordernisse flexibel angepasst werden. Der Schwenkantrieb ermöglicht im Fall eines Fächerwinkels von weniger als 180 Grad das 3D-Vermessen der gesamten Umgebung und andernfalls ein einfaches Wiederholen der 3D-Vermessung.

"Weitgehend eben" ist der Scanfächer dabei einerseits infolge der im Allgemeinen kontinuierlichen Drehbewegung, welche nur zu einer geringfügigen Verwindung des Scanfächers führt; andererseits kann das Auffächern, je nach dazu verwendeter Optik, zu einer geringfügigen Krümmung des Scanfächers führen.

Günstig ist, wenn der Scanfächer über einen Fächerwinkel von weniger als 180 Grad um die Scanachse aufgefächert ist. Dadurch kann sich Bedienpersonal gefahrlos in unmittelbarer Umgebung des Laserscanners aufhalten. Besonders günstig ist dabei, wenn der Fächerwinkel zwischen 52 Grad und 120 Grad, bevorzugt zwischen 60 Grad und 90 Grad, beträgt. Dies ermöglicht den Einsatz einer üblichen z.B. Spiegel- oder Prismenoptik zum Auffächern und somit einen einfachen Aufbau der Scaneinheit.

In einer bevorzugten Ausführungsform des Laserscanners ist die genannte Strahlrichtung, zu welcher die Drehachse normal ist, die Winkelsymmetrale des Fächerwinkels. Das führt zu einem symmetrischen 3D-Vermessen der Umgebung mit einer im Durchschnitt gleichmäßigen Verteilung der Laufzeiten der reflektierten Laserstrahlen.

Wie erläutert kann der vorgegebene Drehwinkel einfach an die jeweiligen Erfordernisse angepasst werden; vorteilhaft ist, wenn der Drehwinkel zwischen 200 und 300 Grad beträgt, sodass nicht interessierende Bereiche der Umgebung - z.B. rund um das Stativ - ausgespart bleiben und die Umgebung rascher und effizienter 3D-vermessen werden kann.

Besonders günstig ist, wenn der Zenit die Winkelsymmetrale des Drehwinkels ist. Der Laserscanner vermisst dabei die Umgebung in Scanstreifen, die z.B. von einer Seite (schräg) unten über den Zenit bis zur anderen Seite (schräg) unten reichen.

Besonders günstig ist, wenn der Schwenkwinkel kleiner oder gleich dem Fächerwinkel ist. Infolge der resultierenden (geringfügigen) Überlappungen benachbarter Scanstreifen werden Lücken beim 3D-Vermessen zuverlässig vermieden.

### [Fortsetzung auf Seite 7]

Dabei ist ferner vorteilhaft, wenn die Scaneinheit dazu ausgebildet ist, nach ihrem Verschwenken über den Schwenkwinkel nur solange einen Scanfächer auszusenden, wie der Schnittwinkel des Zenits mit dem Scanfächer über einem vorgegebenen ersten Schwellwert liegt. Der Zenit ist die Richtung entgegen der Lotrichtung und der Schnittwinkel ist jener Winkel zwischen dem Zenit und dem Scanfächer, der in einer den Zenit enthaltenden Normalebene auf den Scanfächer liegt. Nach dem 3D-Vermessen der Umgebung über den gesamten vorgegebenen Drehwinkel und dem folgenden Verschwenken über den Schwenkwinkel kann durch entsprechende Wahl des ersten Schwellwerts in Abhängigkeit vom Fächerwinkel und vom Schwenkwinkel z.B. der um den Zenit liegende Bereich der Umgebung vom weiteren 3D-Vermessen ausgenommen werden, was die Effizienz des Laserscanners erhöht, da wiederholtes 3D-Vermessen desselben Bereichs vermieden wird.

In einer günstigen Ausführungsform ist der Drehantrieb dazu ausgebildet, seine Drehgeschwindigkeit in vorgegebener Abhängigkeit vom Schnittwinkel des Zenits mit dem Scanfächer zu verändern. Dadurch kann ein rascheres 3D-Vermessen mit gleichmäßiger Auflösung erzielt werden, indem die Drehgeschwindigkeit über Drehwinkelbereiche erhöht wird, in denen nähere Ziele erwartet werden, z.B. der Boden nahe dem Stativ. Insbesondere ist günstig, wenn der Drehantrieb dazu ausgebildet ist, die Scaneinheit schneller zu drehen, wenn der Schnittwinkel des Zenits mit dem Scanfächer unter einem vorgegebenen zweiten Schwellwert liegt, und andernfalls langsamer zu drehen. Durch eine schnellere Drehbewegung rund um den Zenit wird die Effizienz des Laserscanners gesteigert, indem bei Verwendung des Schwenkantriebs durch wiederholtes 3D-Vermessen unter schnellerer Drehbewegung, d.h. mit geringerer Auflösung, im Überlappungsbereich um den Zenit eine höhere Auflösung erzielt wird. Im Fall, dass der Laserscanner keinen Schwenkantrieb umfasst, werden rund um den Zenit allenfalls weniger interessierende Ziele mit höherer Drehgeschwindigkeit und somit geringerer Auflösung vermessen, wodurch wiederum die Effizienz des Laserscanners steigt.

In einer vorteilhaften Ausführungsform ist die Scaneinheit dazu ausgebildet, zumindest einen weiteren, um eine weitere Scanachse aufgefächerten, weitgehend ebenen Scanfächer aus Laserstrahlen auszusenden, wobei die genannte Scanachse und die weitere Scanachse zueinander um die Drehachse geneigt sind. Ein (oder mehrere) solcher weiterer Scanfächer wird/werden durch die ablenkende Optik in der Scaneinheit und somit unabhängig von der Drehbewegung des Drehantriebs erzeugt. Die Umgebung wird dadurch zugleich mit zwei (oder mehreren) Scanfächern vermessen, welche zueinander meist nur geringfügig geneigt sind, nämlich um den Winkel der Neigung ihrer Scanachsen zueinander. Dabei empfängt die Scaneinheit die reflektierten Laserstrahlen aller Scanfächer und der Drehantrieb dreht die Scaneinheit und mit ihr alle Scanfächer über den vorgegebenen Drehwinkel um die Drehachse gegenüber dem Stativ.

In einer günstigen Ausführungsform ist an der Scaneinheit ferner eine an die Auswerteeinheit angeschlossene Digitalkamera montiert. Dadurch kann eine geometrische Kombination der mit der Digitalkamera aufgenommenen Bilder mit der 3D-vermessenen Umgebung erfolgen. Die derart kombinierten Digitalkamerabilder ermöglichen zusätzlich eine präzise visuelle Darstellung der Umgebung, da die Brennweite der Digitalkamera an den Öffnungswinkel der Scaneinheit angepasst werden kann. So ist z.B. die nachträgliche Unterscheidung verschiedener Baumarten oder Oberflächen- bzw. Gesteinsstrukturen der Ziele in der Umgebung einfacher möglich. Dabei ist besonders vorteilhaft, wenn der Drehantrieb dazu ausgebildet ist, das Drehen der Scaneinheit bei einem vorgegebenen Drehwinkel für ein Auslösen der Digitalkamera zu unterbrechen und nach dem Auslösen der Digitalkamera wieder aufzunehmen. So steht auch die Digitalkamera während des Auslösens still. Wenn die Scaneinheit dabei mehrere Scanfächer aussendet, kann das von der Digitalkamera aufgenommene Bild besonders einfach und präzise mit der 3D-vermessenen Umgebung geometrisch kombiniert werden.

Die Erfindung wird nachfolgend anhand von in den beigeschlossenen Zeichnungen dargestellten Ausführungsbeispielen näher erläutert. In den Zeichnungen zeigen:
Fig. 1 einen in einer terrestrischen Umgebung aufgestellten Laserscanner gemäß dem Stand der Technik in einer Perspektivansicht von der Seite;
Fig. 2 einen in der Umgebung aufgestellten erfindungsgemäßen Laserscanner in einer Perspektivansicht von der Seite;
die Fig. 3a bis 3c den Laserscanner von Fig. 2 in mithilfe seines Schwenkantriebs fortschreitend weiter geschwenkten Stellungen, jeweils in derselben Seitenansicht; und
die Fig. 4a bis 4c den Laserscanner von Fig. 2 in den Stellungen gemäß den Fig. 3a bis 3c jeweils in Draufsicht.

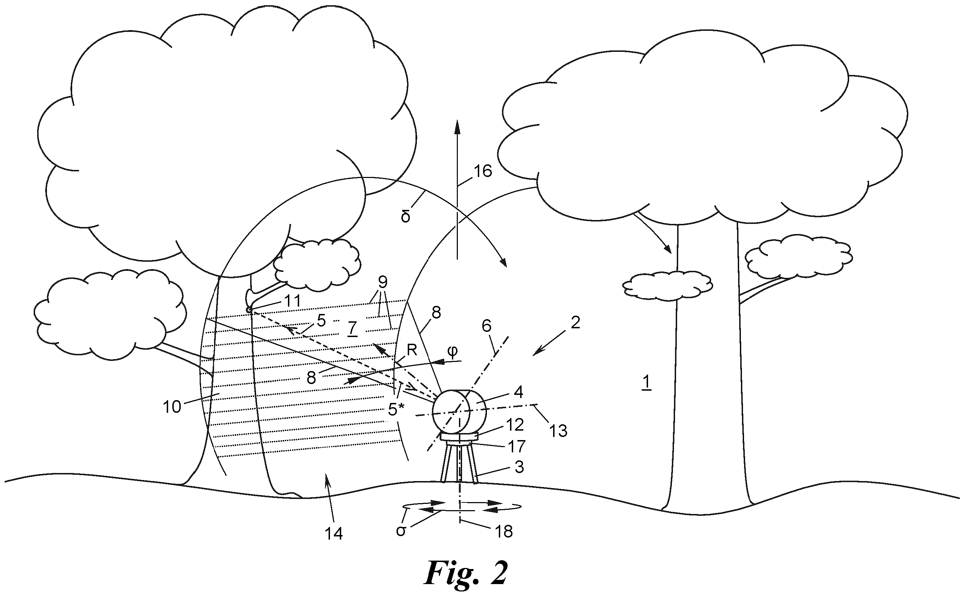

In Bezug auf den in Fig. 1 dargestellten Laserscanner 2' gemäß dem Stand der Technik wird auf die einleitenden Ausführungen verwiesen. In weiterer Folge wird anhand der Fig. 2 bis 4 ein in einer Umgebung 1 aufgestellter erfindungsgemäßer Laserscanner 2 beschrieben, wobei gleiche oder ähnliche Elemente wie in Fig. 1 mit den gleichen Bezugszeichen versehen sind.

Der Laserscanner 2 gemäß Fig. 2 umfasst zum 3D-Vermessen der Umgebung 1 nach einem Laserlaufzeitverfahren wieder das Stativ 3, welches in der Umgebung 1 aufgestellt ist. Die Umgebung 1 ist im dargestellten Beispiel ein Wald, kann alternativ jedoch z.B. ein Steinbruch, eine Felswand, ein Berg, ein Straßenzug, ein Gebäude, ein Innenraum oder eine andere Umgebung 1 sein.

Ferner umfasst der Laserscanner 2 die am Stativ 3 drehbar gelagerte Scaneinheit 4. Die Scaneinheit 4 ist dazu ausgebildet, beim 3D-Vermessen der Umgebung 1 Laserstrahlen 5 auszusenden, welche mit einer hohen Rate von typisch einigen 10 kHz bis einigen MHz moduliert oder gepulst sind. Die Laserstrahlen 5 werden mit Hilfe einer ablenkenden Optik (in Fig. 2 nicht sichtbar), z.B. rotierenden Spiegeln, Prismen od.dlg., über einen Fächerwinkel ϕ um eine Scanachse 6 aufgefächert und bilden so einen weitgehend ebenen Scanfächer 7, der in Fig. 2 durch Schenkeln 8 des Fächerwinkels ϕ und eine die Schenkel 8 verbindende Scanlinie 9 veranschaulicht ist.

Im Beispiel der Fig. 2 trifft ein Laserstrahl 5 des Scanfächers 7 auf ein Ziel (hier: den Baumstamm) 10 in der Umgebung 1, u.zw. in dem Auftreffpunkt 11 am Baumstamm 10. Der Laserstrahl 5 wird am Baumstamm 10 (zumindest teilweise) reflektiert und der reflektierte Laserstrahl 5* in der Scaneinheit 4 des Laserscanners 2 empfangen.

Der Laserscanner 2 umfasst ferner einen Drehantrieb 12, welcher dazu ausgebildet ist, die Scaneinheit 4 über einen vorgegebenen Drehwinkel δ um eine Drehachse 13 gegenüber dem Stativ 3 zu drehen. Die Drehachse 13 ist, wenn das Stativ 3 in der Umgebung 1 aufgestellt ist, etwa horizontal und dabei sowohl zur Scanachse 6 als auch zu einer beliebigen innerhalb des Scanfächers 7 liegenden Strahlrichtung R der Laserstrahlen 5 normal. Es versteht sich, dass die Scanachse 6 und mit ihr der Scanfächer 7 beim Drehen der Scaneinheit 4 um die Drehachse 13 mitgedreht werden.

Das 3D-Vermessen durch den Laserscanner 2 ist in Fig. 2 durch einen Scanstreifen 14 in Form eines liegenden Zylindermantels oder (hier) Zylindermantelsegments veranschaulicht. Der Scanstreifen 14 ist durch die etwa horizontalen Scanlinien 9 gebildet, die infolge der Drehbewegung um den Drehwinkel 5 zeilenweise zueinander parallel aufeinanderfolgen. Wie der Scanstreifen 14 dienen auch die dargestellten Scanlinien 9 lediglich zur Veranschaulichung und markieren einen vom Laserscanner 2 3D-vermessenen Bereich der Umgebung 1; tatsächlich werden allenfalls Auftreffpunkte 11 der Laserstrahlen 5 an Zielen 10 der Umgebung 1 sichtbar und auch das nur, wenn die Laserstrahlen 5 im sichtbaren Wellenlängenbereich liegen.

Der Laserscanner 2 umfasst ferner die an die Scaneinheit 4 und den Drehantrieb 12 angeschlossene Auswerteeinheit, welche die empfangenen Laserstrahlen 5* auswertet, d.h. die jeweilige Aussenderichtung der Laserstrahlen 5 in Abhängigkeit vom Auffächern in der Scaneinheit 4 und dem jeweiligen Drehwinkel δ ermittelt und die Laufzeit vom Aussenden bis zum Empfangen von der Scaneinheit 4 erhält und dabei entweder erfasst oder anhand der Aussenderichtung und der Laufzeit auch die Lage des zugehörigen Auftreffpunkts 11 in der Umgebung 1 gegenüber dem Laserscanner 2 ermittelt. Aus den jeweiligen Lagen der ermittelten Auftreffpunkte 11 kann in weiterer Folge - durch die Auswerteeinheit oder separat davon - eine 3D-Punktwolke und/oder ein 3D-Modell der Umgebung 1 erstellt werden.

Es sei angemerkt, dass der Scanfächer 7 im Allgemeinen nicht exakt sondern "weitgehend" eben ist, da er einerseits infolge der meist kontinuierlichen Drehbewegung um die Drehachse 13 eine geringfügige Verwindung aufweist und andererseits das Auffächern selbst, je nach dazu verwendeter Optik, zu einer geringfügigen Krümmung des Scanfächers 7 führen kann.

Im Beispiel der Fig. 2 ist der Scanfächer 7 über einen Fächerwinkel ϕ von etwa 60 Grad um die Scanachse 6 aufgefächert. Der Fächerwinkel ϕ ist von der zum Auffächern verwendeten Optik abhängig und beträgt typisch zwischen 52 Grad und 120 Grad, bevorzugt zwischen 60 Grad und 90 Grad. Es versteht sich, dass der Fächerwinkel ϕ alternativ kleiner oder größer sein kann, jedoch weniger als 180 Grad, ausgenommen in Ausnahmefällen.

Ferner kann die genannte Strahlrichtung R, auf welche die Drehachse 13 normal steht, irgendeine Richtung innerhalb des Scanfächers 7 sein; im Beispiel der Fig. 2 ist die genannte Strahlrichtung R die Winkelsymmetrale des Fächerwinkels ϕ, d.h. die Strahlrichtung R halbiert den Fächerwinkel ϕ.

Auch der Drehwinkel δ kann unterschiedlich vorgegeben sein und dabei bis zu oder sogar mehr als 360 Grad betragen; im Allgemeinen wird der vorgegebene Drehwinkel δ jedoch kleiner als 360 Grad sein, insbesondere zwischen 200 und 300 Grad betragen, auch weil der Bereich der Umgebung 1 rund um das Stativ 3 meist weniger interessiert und vom Stativ 3 zumindest teilweise abgeschattet ist. Je nach der zu vermessenden Umgebung 1 könnte der vorgegebene Drehwinkel δ alternativ deutlich kleiner als 200 Grad, z.B. 90 Grad oder 120 Grad, betragen, wenn z.B. eine Felswand oder Gebäudefront 3D-vermessen werden soll.

Optional verläuft die Drehbewegung der Scaneinheit 4 symmetrisch um den Zenit 16, welcher die der Lotrichtung entgegengesetzte Richtung bezeichnet, d.h. der Zenit 16 ist in diesem Beispiel die Winkelsymmetrale des Drehwinkels δ.

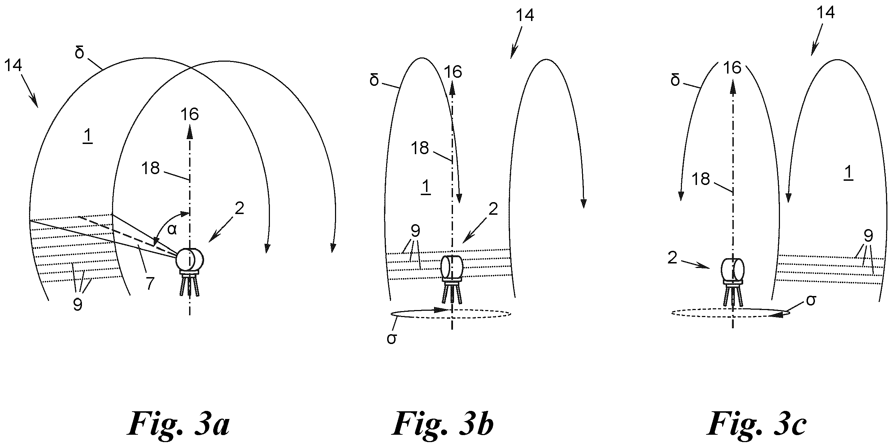

Im Beispiel der Fig. 3a - 3c umfasst der Laserscanner 2 ferner einen optionalen Schwenkantrieb 17 (Fig. 2). Der Schwenkantrieb 17 ist dazu ausgebildet, nach dem Drehen der Scaneinheit 4 über den Drehwinkel δ die Scaneinheit 4 über einen vorgegebenen Schwenkwinkel σ um eine vertikale Schwenkachse 18 gegenüber dem Stativ 3 zu schwenken, und ist ebenfalls an die Auswerteeinheit angeschlossen, damit die Auswerteeinheit die Aussenderichtung auch in Abhängigkeit vom jeweiligen Schwenkwinkel σ ermittelt. D.h. der Laserscanner 2 vermisst zunächst seine Umgebung 1 gemäß Fig. 3a zeilenweise in einem Scanstreifen 14 infolge der Drehbewegung über den Drehwinkel δ um die Drehachse 13. Nach dem Drehen der Scaneinheit 4 über den Drehwinkel δ schwenkt der Schwenkantrieb 17 die Scaneinheit 4 gemäß Fig. 3b um den vorgegebenen Schwenkwinkel σ, worauf der Laserscanner 2 die Umgebung 1 durch Drehen seiner Scaneinheit 4 um die Drehachse 13 erneut in einem Scanstreifen 14 3D-vermisst. Gemäß Fig. 3c wird das Verschwenken um die Schwenkachse 18 und das 3D-Vermessen der Umgebung 1 in einem (oder falls gewünscht: mehreren) weiteren Scanstreifen 14 wiederholt.

In einer optionalen Ausführungsform ist die Scaneinheit 4 dazu ausgebildet, nach jedem Verschwenken um die Schwenkachse 18 nur solange einen Scanfächer 7 auszusenden, wie der Schnittwinkel α des Zenits 16 mit dem Scanfächer 7 über einem vorgegebenen ersten Schwellwert liegt. Der Schnittwinkel α ist jener Winkel zwischen dem Zenit 16 und dem Scanfächer 7, der in einer den Zenit 16 enthaltenden Normalebene auf den Scanfächer 7 liegt, d.h. der kleinste Winkel, den der Zenit 16 mit dem jeweils ausgesandten Scanfächer 7 einschließt. So können einander überlappende Scanstreifen 14 infolge eines wiederholten 3D-Vermessens ein und desselben Bereichs rundum den Zenit 16 nach dem Verschwenken der Scaneinheit 4 vermieden werden. Der erste Schwellwert wird dabei z.B. so groß oder kleiner als der halbe Fächerwinkel ϕ gewählt.

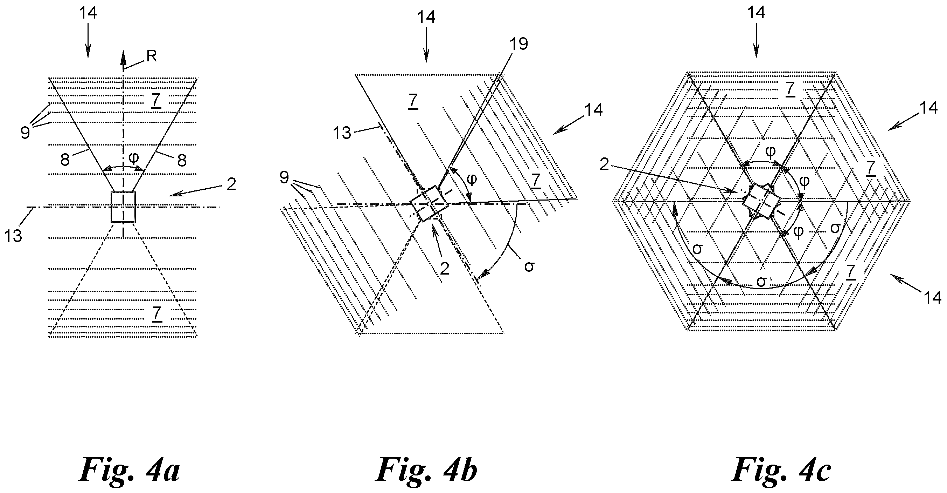

Es sei angemerkt, dass die Größe des Schwenkwinkels σ nicht zwingend abhängig von der Größe des Fächerwinkels ϕ ist; wenn Lücken beim 3D-Vermessen der Umgebung 1 vermieden werden sollen, ist jedoch der Schwenkwinkel σ kleiner oder gleich dem Fächerwinkel ϕ. Dies veranschaulichen die Beispiele der Fig. 4a - 4c.

Fig. 4a zeigt das 3D-Vermessen der Umgebung 1 mit einem über einen Fächerwinkel ϕ von etwa 60 Grad aufgefächerten Scanfächer 7. Die dargestellten Scanlinien 9 mit unterschiedlichem gegenseitigem Abstand versinnbildlichen eine optionale Variante des Laserscanners 2, in welcher der Drehantrieb 12 dazu ausgebildet ist, seine Drehgeschwindigkeit in einer vorgegebenen Abhängigkeit vom Schnittwinkel α des Zenits 16 mit dem Scanfächer 7 zu verändern. Im dargestellten Beispiel dreht der Drehantrieb 12 die Scaneinheit 4 schneller, wenn der Schnittwinkel α des Zenits 16 mit dem Scanfächer 7 unter einem vorgegebenen zweiten Schwellwert liegt, und andernfalls langsamer. Der Zweck der verschiedenen Drehgeschwindigkeiten wird weiter unten unter Bezugnahme auf Fig. 4c näher erläutert.

Im Beispiel der Fig. 4b wurde die Scaneinheit 4 nach dem Drehen der Scaneinheit 4 über den Drehwinkel δ vom Schwenkantrieb 17 über einen Schwenkwinkel σ von etwa 58 Grad gegenüber dem Stativ 3 (hier nicht sichtbar) verschwenkt. Infolgedessen ergibt sich beim erneuten 3D-Vermessen der Umgebung 1 mit dem Scanfächer 7 unter demselben Fächerwinkel ϕ von etwa 60 Grad gegenüber dem 3D-Vermessen in der ursprünglichen Ausrichtung vor dem Verschwenken eine geringfügige Überlappung 19 der Scanstreifen 14, sodass zwischen diesen keine Lücke in der 3D-Vermessung der Umgebung 1 verbleibt. Alternativ könnte der Schwenkwinkel σ im Vergleich zum Fächerwinkel ϕ noch kleiner, gleich groß oder, falls Lücken zulässig sind, größer sein.

Fig. 4c zeigt eine Variante, bei welcher sowohl der Schwenkwinkel σ als auch der Fächerwinkel ϕ jeweils 60 Grad betragen und der Schwenkantrieb 17 die Scaneinheit 4 zweimal über den Schwenkwinkel σ geschwenkt hat, wie durch die jeweils über 60 Grad geschwenkten Scanfächer 7, Scanlinien 9 und Scanstreifen 14 veranschaulicht ist. Der Laserscanner 2 vermisst die Umgebung 1 in diesem Beispiel - abgesehen von einem Bereich unterhalb des Stativs 3 - vollständig und lückenlos, d.h. die Scanstreifen 14 bilden eine geschlossene Hülle um den Laserscanner 2. Obwohl der Drehantrieb 12 die Scaneinheit 4 in der Nähe des Zenits 16, wo der Schnittwinkel α des Zenits 16 mit dem Scanfächer 7 unter dem vorgegebenen zweiten Schwellwert liegt, schneller gedreht hat, wird aufgrund der Überlappungen beim 3D-Vermessen, d.h. des wiederholten 3D-Vermessens bei höherer Drehgeschwindigkeit und somit geringerer Auflösung, auch in diesem Bereich eine hohe Auflösung erzielt. Der zweite Schwellwert wird dazu optional kleiner oder gleich dem halben Fächerwinkel ϕ gewählt.

Es sei angemerkt, dass der Drehantrieb 12 seine Drehgeschwindigkeit ergänzend oder alternativ in anderer Abhängigkeit vom Schnittwinkel α des Zenits 16 mit dem Scanfächer 7 verändern kann, z.B. dort eine höhere Drehgeschwindigkeit einnehmen kann, wo nähere (z.B. am Boden rundum den Laserscanner 2) bzw. weniger interessierende (z.B. rund um den Zenit 16) Ziele 10 liegen bzw. zu erwarten sind.

Optional ist ferner die Scaneinheit 4 dazu ausgebildet, zum 3D-Vermessen der Umgebung 1 zumindest einen weiteren, weitgehend ebenen Scanfächer (nicht dargestellt) aus Laserstrahlen 5 auszusenden, welcher um eine weitere Scanachse aufgefächert ist. Die genannte Scanachse 6 und die weitere Scanachse sind zueinander um die Drehachse 13 geneigt, z.B. um wenige zehntel Grad oder wenige Grad. Der bzw. die weitere(n) Scanfächer wird/werden durch eine geeignete ablenkende Optik der Scaneinheit 4 und somit unabhängig von der Drehbewegung des Drehantriebs 12 erzeugt, z.B. mithilfe eines schwingenden Spiegels oder eines rotierenden Spiegelrads mit zueinander verschieden geneigten Spiegelfacetten od.dgl. Die Umgebung 1 wird dadurch zugleich mit zwei oder mehr zueinander parallelen Scanlinien 9 3D-vermessen. Dabei dreht der Drehantrieb 12 die Scaneinheit 4 und mit ihr alle Scanfächer über den vorgegebenen Drehwinkel δ um die Drehachse 13 gegenüber dem Stativ 3; ferner empfängt die Scaneinheit 4 die reflektierten Laserstrahlen 5* aller Scanfächer.

In einer weiteren optionalen Ausführungsvariante ist an der Scaneinheit 4 ferner eine an die Auswerteeinheit angeschlossene Digitalkamera (nicht dargestellt) montiert. Die Digitalkamera wird auf diese Weise mit der Scaneinheit 4 mitgedreht und optional mitgeschwenkt und kann in ihrer Brennweite an den Fächerwinkel ϕ angepasst werden. Von der Digitalkamera aufgenommene Bilder können in weiterer Folge in der Auswerteeinheit oder separat davon mit der 3D-Vermessung der Umgebung 1 geometrisch kombiniert und visuell ausgewertet werden.

Der Drehantrieb 12 kann optional dazu ausgebildet sein, das Drehen der Scaneinheit 4 bei einem vorgegebenen Drehwinkel δ für ein Auslösen der Digitalkamera zu unterbrechen, um die Digitalkamera für die Bildaufnahme stillzuhalten, und nach dem Auslösen der Digitalkamera wieder aufzunehmen.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Laserscanner zum 3D-Vermessen einer Umgebung (1) nach einem Laserlaufzeitverfahren, umfassend
ein Stativ (3) zum Aufstellen in der Umgebung (1),
eine am Stativ (3) drehbar gelagerte Scaneinheit (4), welche dazu ausgebildet ist, einen um eine Scanachse (6) aufgefächerten, weitgehend ebenen Scanfächer (7) aus Laserstrahlen (5) auszusenden und an Zielen (10) der Umgebung (1) reflektierte Laserstrahlen (5*) zu empfangen,
einen Drehantrieb (12), welcher dazu ausgebildet ist, die Scaneinheit (4) über einen vorgegebenen Drehwinkel (δ) um eine zur Scanachse (6) und zu einer innerhalb des Scanfächers (7) liegenden Strahlrichtung (R) normale Drehachse (13) gegenüber dem Stativ (3) zu drehen, und
eine an die Scaneinheit (4) und den Drehantrieb (12) angeschlossene Auswerteeinheit zur Auswertung der empfangenen Laserstrahlen (5*),
wobei die Drehachse (13), wenn das Stativ (3) in der Umgebung (1) aufgestellt ist, horizontal ist,
**gekennzeichnet durch** einen Schwenkantrieb (17), welcher an die Auswerteeinheit angeschlossen und dazu ausgebildet ist, nach dem Drehen der Scaneinheit (4) über den Drehwinkel (δ) die Scaneinheit (4) über einen vorgegebenen Schwenkwinkel (σ) um eine vertikale Schwenkachse (18) gegenüber dem Stativ (3) zu schwenken.

2. Laserscanner nach Anspruch 1, **dadurch gekennzeichnet, dass** der Scanfächer (7) über einen Fächerwinkel (ϕ) von weniger als 180 Grad um die Scanachse (6) aufgefächert ist.

3. Laserscanner nach Anspruch 2, **dadurch gekennzeichnet, dass** der Fächerwinkel (ϕ) zwischen 52 Grad und 120 Grad, bevorzugt zwischen 60 Grad und 90 Grad, beträgt.

4. Laserscanner nach Anspruch 2 oder 3, **dadurch gekennzeichnet, dass** die genannte Strahlrichtung (R) die Winkelsymmetrale des Fächerwinkels (ϕ) ist.

5. Laserscanner nach einem der Ansprüche 1 bis 4, **dadurch gekennzeichnet, dass** der Drehwinkel (δ) zwischen 200 und 300 Grad beträgt.

6. Laserscanner nach einem der Ansprüche 1 bis 5, **dadurch gekennzeichnet, dass** der Zenit (16) die Winkelsymmetrale des Drehwinkels (δ) ist.

7. Laserscanner nach einem der Ansprüche 1 bis 6, **dadurch gekennzeichnet, dass** der Schwenkwinkel (σ) kleiner oder gleich dem Fächerwinkel (ϕ) ist.

8. Laserscanner nach einem der Ansprüche 1 bis 7, **dadurch gekennzeichnet, dass** die Scaneinheit (4) dazu ausgebildet ist, nach ihrem Verschwenken über den Schwenkwinkel (σ) nur solange einen Scanfächer (7) auszusenden, wie der Schnittwinkel (α) des Zenits (16) mit dem Scanfächer (7) über einem vorgegebenen ersten Schwellwert liegt.

9. Laserscanner nach einem der Ansprüche 1 bis 8, **dadurch gekennzeichnet, dass** der Drehantrieb (12) dazu ausgebildet ist, seine Drehgeschwindigkeit in vorgegebener Abhängigkeit vom Schnittwinkel (α) des Zenits (16) mit dem Scanfächer (7) zu verändern.

10. Laserscanner nach Anspruch 9, **dadurch gekennzeichnet, dass** der Drehantrieb (12) dazu ausgebildet ist, die Scaneinheit (4) schneller zu drehen, wenn der Schnittwinkel (α) des Zenits (16) mit dem Scanfächer (7) unter einem vorgegebenen zweiten Schwellwert liegt, und andernfalls langsamer zu drehen.

11. Laserscanner nach einem der Ansprüche 1 bis 10, **dadurch gekennzeichnet, dass** die Scaneinheit (4) dazu ausgebildet ist, zumindest einen weiteren, um eine weitere Scanachse aufgefächerten, weitgehend ebenen Scanfächer aus Laserstrahlen (5) auszusenden, wobei die genannte Scanachse (6) und die weitere Scanachse zueinander um die Drehachse (13) geneigt sind.

12. Laserscanner nach einem der Ansprüche 1 bis 11, **dadurch gekennzeichnet, dass** an der Scaneinheit (4) ferner eine an die Auswerteeinheit angeschlossene Digitalkamera montiert ist.

13. Laserscanner nach Anspruch 12, **dadurch gekennzeichnet, dass** der Drehantrieb (12) dazu ausgebildet ist, das Drehen der Scaneinheit (4) bei einem vorgegebenen Drehwinkel (δ) für ein Auslösen der Digitalkamera zu unterbrechen und nach dem Auslösen der Digitalkamera wieder aufzunehmen.

## Claims

1. Laser scanner for 3D measuring an environment (1) according to a laser time-of-flight method, comprising:
a stand (3) for placement in the environment (1),
a scanning unit(4) rotatably mounted on the stand (3) and configured to emit a largely planar fan (7) of laser beams (5) fanned out about a scanning axis (6) and to receive laser beams (5*) reflected at targets (10) of the environment (1),
a rotation drive (12) configured to rotate the scanning unit(4) relative to the stand (3) by a predetermined rotation angle (δ) about a rotation axis (13) that is normal to the scanning axis (6) and to a beam direction (R) within the fan (7), and
an evaluation unit connected to the scanning unit(4) and the rotation drive (12) for evaluating the received laser beams (5*),
wherein the rotation axis (13) is horizontal when the stand (3) is placed in the environment (1),
**characterized by** a pivot drive (17) connected to the evaluation unit and configured to pivot the scanning unit(4) relative to the stand (3) by a predetermined pivot angle (δ) about a vertical pivot axis (18) after the scanning unit(4) has been rotated by the rotation angle (δ).

2. Laser scanner according to claim 1, **characterized in that** the fan (7) is fanned out about the scanning axis (6) over a fan angle (ϕ) of less than 180 degrees.

3. Laser scanner according to claim 2, **characterized in that** the fan angle (ϕ) is between 52 degrees and 120 degrees, preferably between 60 degrees and 90 degrees.

4. Laser scanner according to claim 2 or 3, **characterized in that** said beam direction (R) is the angular bisector of the fan angle (ϕ).

5. Laser scanner according to any one of claims 1 to 4, **characterized in that** the rotation angle (δ) is between 200 and 300 degrees.

6. Laser scanner according to any one of claims 1 to 5, **characterized in that** the zenith (16) is the angular bisector of the rotation angle (δ).

7. Laser scanner according to any one of claims 1 to 6, **characterized in that** the pivot angle (σ) is less than or equal to the fan angle (ϕ).

8. Laser scanner according to any one of claims 1 to 7, **characterized in that** the scanning unit(4) is configured to emit a fan (7), after pivoting over the pivot angle (σ), only as long as the intersection angle (α) of the zenith (16) with the fan (7) exceeds a predetermined first threshold.

9. Laser scanner according to any one of claims 1 to 8, **characterized in that** the rotation drive (12) is configured to change its rotation speed in a predetermined dependency on the intersection angle (α) of the zenith (16) with the fan (7).

10. Laser scanner according to claim 9, **characterized in that** the rotation drive (12) is configured to rotate the scanning unit(4) faster when the intersection angle (α) of the zenith (16) with the fan (7) is below a predetermined second threshold, and slower otherwise.

11. Laser scanner according to any one of claims 1 to 10, **characterized in that** the scanning unit(4) is configured to emit at least one further largely planar fan of laser beams (5) fanned out about a further scanning axis, wherein said scanning axis (6) and the further scanning axis are inclined with respect to each other about the rotation axis (13).

12. Laser scanner according to any one of claims 1 to 11, **characterized in that** a digital camera connected to the evaluation unit is mounted on the scanning unit(4).

13. Laser scanner according to claim 12, **characterized in that** the rotation drive (12) is configured to interrupt the rotation of the scanning unit(4) at a predetermined rotation angle (δ) for triggering the digital camera and resume rotation after having triggered the digital camera.

## Revendications

1. Balayeur laser pour la mesure en 3D d'un environnement (1) selon un procédé de temps de vol laser, comprenant
un statif (3) à disposer dans l'environnement (1),
une unité de balayage (4) logée rotative sur le statif (3) et conçue pour émettre un éventail de balayage (7) de rayonnements laser (5) largement plan disposé en éventail autour d'un axe de balayage (6) et pour recevoir des rayonnements laser (5*) réfléchis sur des cibles (10) de l'environnement (1),
un entraînement rotatif (12) conçu pour tourner l'unité de balayage (4) par rapport au statif (3) d'un angle de rotation (δ) prédéterminé autour d'un axe de rotation (13) normal par rapport à l'axe de balayage (6) et par rapport à une direction de rayonnement (R) se situant à l'intérieur de l'éventail de balayage (7), et
une unité d'exploitation reliée à l'unité de balayage (4) et à l'entrainement rotatif (12) et permettant l'exploitation des rayonnements laser (5*) reçus,
dans lequel l'axe de rotation (13) est horizontal lorsque le statif (3) est disposé dans l'environnement (1),
**caractérisé par** un entraînement pivotant (17) relié à l'unité d'exploitation et conçu pour pivoter l'unité de balayage (4) par rapport au statif (3) d'un angle de pivotement (σ) prédéterminé autour d'un axe de pivotement vertical (18) après la rotation de l'unité de balayage (4) de l'angle de rotation (δ).

2. Balayeur laser selon la revendication 1, **caractérisé en ce que** l'éventail de balayage (7) est disposé en éventail sur un angle d'éventail (ϕ) inférieur à 180 degrés autour de l'axe de balayage (6).

3. Balayeur laser selon la revendication 2, **caractérisé en ce que** l'angle d'éventail (ϕ) se situe entre 52 degrés et 120 degrés, de préférence entre 60 degrés et 90 degrés.

4. Balayeur laser selon la revendication 2 ou 3, **caractérisé en ce que** ladite direction de rayonnement (R) est l'axe de symétrie angulaire de l'angle d'éventail (ϕ).

5. Balayeur laser selon l'une des revendications 1 à 4, **caractérisé en ce que** l'angle de rotation (δ) se situe entre 200 et 300 degrés.

6. Balayeur laser selon l'une des revendications 1 à 5, **caractérisé en ce que** le zénith (16) est l'axe de symétrie angulaire de l'angle de rotation (δ).

7. Balayeur laser selon l'une des revendications 1 à 6, **caractérisé en ce que** l'angle de pivotement (σ) est inférieur ou égal à l'angle d'éventail (ϕ).

8. Balayeur laser selon l'une des revendications 1 à 7, **caractérisé en ce que** l'unité de balayage (4) est conçue, après son pivotement de l'angle de pivotement (σ), pour émettre un éventail de balayage (7) aussi longtemps que l'angle d'intersection (α) du zénith (16) avec l'éventail de balayage (7) se situe au-dessus d'une première valeur de seuil prédéterminée.

9. Balayeur laser selon l'une des revendications 1 à 8, **caractérisé en ce que** l'entrainement rotatif (12) est conçu pour modifier sa vitesse de rotation avec une dépendance prédéterminée de l'angle d'intersection (α) du zénith (16) avec l'éventail de balayage (7).

10. Balayeur laser selon la revendication 9, **caractérisé en ce que** l'entrainement rotatif (12) est conçu pour tourner l'unité de balayage (4) plus vite lorsque l'angle d'intersection (α) du zénith (16) avec l'éventail de balayage (7) se situe en-dessous d'une deuxième valeur de seuil prédéterminée, et dans le cas contraire, pour la tourner plus lentement.

11. Balayeur laser selon l'une des revendications 1 à 10, **caractérisé en ce que** l'unité de balayage (4) est conçue pour émettre au moins un autre éventail de balayage de rayonnements laser (5) largement plan disposé en éventail autour d'un autre axe de balayage, où ledit axe de balayage (6) et l'autre axe de balayage sont inclinés l'un par rapport à l'autre autour de l'axe de rotation (13).

12. Balayeur laser selon l'une des revendications 1 à 11, **caractérisé en ce qu'**une caméra numérique reliée à l'unité d'exploitation est en outre montée sur l'unité de balayage (4).

13. Balayeur laser selon la revendication 12, **caractérisé en ce que** l'entrainement rotatif (12) est conçu pour interrompre la rotation de l'unité de balayage (4) à un angle de rotation (δ) prédéterminé pour un déclenchement de la caméra numérique et pour la reprendre après le déclenchement de la caméra numérique.
